Europäisches Patentamt

European Patent Office

Office européen des brevets

(19)

(11) Publication number: **0 234 663**

**A1**

# (12) EUROPEAN PATENT APPLICATION

(21) Application number: **87200292.8**

(22) Date of filing: **20.02.87**

(51) Int. Cl.³: **H 02 K 29/12**
**H 02 P 6/02**

(30) Priority: **25.02.86 NL 8600464**

(43) Date of publication of application:
**02.09.87 Bulletin 87/36**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Van Rosmalen, Gerard E.**
**c/o INT. OCTROOIBUREAU B.V. Prof. Holstlaan 6**
**NL-5656 AA Eindhoven(NL)**

(72) Inventor: **Bierhoff, Martinus P. M.**
**c/o INT. OCTROOIBUREAU B.V. Prof. Holstlaan 6**
**NL-5656 AA Eindhoven(NL)**

(74) Representative: **Beckers, Hubertus Franciscus**
**Maria et al,**
**INTERNATIONAAL OCTROOIBUREAU B.V. Prof.**
**Holstlaan 6**
**NL-5656 AA Eindhoven(NL)**

(54) Brushless d.c. motor.

(57) The phases (F1, F2) of a multi-phase brushless d.c. motor (1) having a permanent-magnet rotor (2) are magnetically linked via magnetic linkage paths (L1, L2, L3, L4) whose differences in reluctance are rotor-position dependent. A circuit (30) generates a high-frequency current Ip in one (F1) of the phases and detects the current Is induced in the other phase (F2) by this high-frequency current, the magnitude of the current Is being dependent on the rotor-position-dependent magnetic linkage between the phases (F1, F2). The circuit (30) derives a signal Vm' which is a measure of the rotor position from the currents Is and Ip. A commutation circuit (36) energises the phases (F1 and F2) depending on the rotor position θ represented by Vm'.

FIG.4

FIG.1

"Brushless d.c. motor."

The invention relates to a brushless d.c. motor comprising a permanent-magnet rotor, a stator of a magnetisable material in which at least two stator coils are incorporated, a detection circuit for detecting variations in rotor-position dependent parameters of the stator coils, and a commutation circuit for energising the stator coils depending on the detected variations. Such a motor is known from Japanese Kokai No. 55-18834.

In the known motor the detection circuit detects the rotor-position dependent variations in self-inductance of the stator coils. For this purpose the motor is provided with circuits which energise the stator coils with a high-frequency alternating voltage. The resulting high-frequency alternating currents are detected. These detected currents function as detection signals for the commutation circuit which derives from these signals the instants at which the energising current is to be commutated. These detection signals comprise a rotor-position-dependent component and a rotor-position-independent component, determined by the rotor-position-dependent part and the rotor-position-independent part of the self-inductance respectively.

In order to obtain a detection which is highly immune to spurious signals it is desirable that the ratio between the rotor-position-dependent part and the rotor-position-independent part of the self-inductance is large. A large ratio between these parts, however, means that the relationship between the number of ampere-turns of the stator coils and the resulting magnetic flux is highly rotor-position dependent, which results in less favourable driving characteristics (such as for example the torque characteristic) of the motor.

It is the object of the invention to provide a brushless motor of the type defined in the opening sentence, which enables a detection which is immune to spurious signals to be obtained without the driving characteristics of the motor being adversely affected.

According to the invention this object is achieved in that the stator coils or stator coil combinations are magnetically linked via at least one magnetic linkage path having a substantially rotor-position-independent geometry, in which linkage path the permanent-magnet rotor produdes a magnetic flux with a rotor-position-dependent distribution, the dimensions of the linkage path being selected in such a way, in order to obtain a rotor-position-dependent linkage, that in portions of the linkage path a rotor-position-dependent magnetic saturation is obtained, the detection circuit being adapted to detect the variations in magnetic linkage.

The magnitude of the magnetic linkage hardly affects the driving characteristics of the motor. This enables the ratio between the rotor-position-dependent component and the rotor-position-independent component of the magnetic linkage to be optimised without thereby adversely affecting the driving characteristics of the motor. Moreover, the motor in accordance with the invention has the advantage that the magnetic linkage can be detected by means of very simple circuits.

US-PS 4.450.396 describes an electronically controlled synchronous motor in which the rotor position is detected by detecting the rotor-position-dependent linkage between a field winding and an armature winding, which are both incorporated in the stator. The rotor-position dependence of the magnetic linkage in this synchronous motor results from a rotor-position dependent change of the dimensions of that part of the air gap between the rotor and stator which forms part of the magnetic linkage path via which the windings are linked. However, this has the disadvantage that it requires an intricate stator and rotor construction, involving the provision of teeth on the stator and rotor.

A suitable embodiment of the invention is characterized in that the coils or combinations of coils
are linked via different magnetic-linkage paths in such
a way that the components of the magnetic linkage
determined by the different linkage paths at least partly
compensate for each other and in that the differences
between the reluctances of the linkage paths are rotor-
position dependent.

In this embodiment the partial compensation of the
magnetic-linkage components determined by the different
magnetic linkage paths ensures that the rotor-position-
independent component of the magnetic linkage is small,
resulting in a very favourable ratio between the rotor-
position-dependent and the rotor-position-independent
magnetic-linkage components.

A further embodiment of the invention is characterized in  that the rotor comprises $m$ poles which are
spaced equidistantly over the rotor circumference, in that
the stator coils are arranged on $n$ stator teeth which are
spaced equidistantly over the stator circumference, $m$ and
$n$ being integers and not being submultiples of each
other, and in that the portions with a rotor-position-
dependent saturation are constituted by portions of the
linkage paths which are disposed symmetrically relative to
one of the axes of symmetry of the stator. As a result of
the selected ratio between the number of poles and the
number of stator teeth in this embodiment, the distribution
of the magnetic lines of force within the stator is only
symmetrical relative to the axes of symmetry of the
stator for a limited number of rotor positions, so that
a motor with rotor-position-dependent magnetic saturation
in the magnetic linkage-paths is obtained in a constructionally simple manner.

A further embodiment of the invention is characterized in that the number of stator teeth is 4 or a
multiple of 4, in that the stator coils on stator teeth
which extend in line with each other are arranged in series, in that the detection circuit is adapted to detect the magnetic linkage between series arrangements of stator coils arranged on stator teeth which extend perpendicularly to one another. This embodiment has the advantage that the rotor-position-independent components of the magnetic linkage substantially compensate for each other, resulting in a detection which highly immune to interference.

Another embodiment of the invention is characterized in that the detection circuit comprises mains for generating an alternating current in one of the magnetically linked coils or coil combinations, the frequency of said alternating current being higher than the commutation frequency, and means which detect the inductions in the stator coil or coil combinations by the alternating current, in order to detect variations in the magnetic linkage, which embodiment is very attractive because of the simplicity of the detection circuit.

A further embodiment of the invention is characterized in that the magnetically linked stator coils or combinations of stator coils are included in series tuned circuits having substantially equal tuning frequencies. This embodiment has the advantage that it is practically immune to spurious signals of a frequency outside the frequency band defined by the tuned circuits.

In an embodiment of the invention which is characterized further in that the tuning frequencies are equal to the oscillation frequency of the oscillator, the high-frequency signals in the stator coils have optimum amplitudes.

A further embodiment of the invention is characterized in that one of the series tuned circuits is incorporated in the oscillator as the frequency-determining element. The number of parts of the detection circuit is then very small owing to the integration of the series tuned circuit comprising the stator coil in the oscillator.

Another embodiment of the invention, which is very attractive because of the small number of parts of the detection circuit, is characterized in that the detection circuit comprises an oscillator having an oscillation frequency higher than the commutation frequency, the linked stator coils or combinations of stator coils being incorporated in said oscillator as phase-shifting elements, and in that the means for detecting variations in magnetic linkage detect the phase difference between the phase shifting elements.

Embodiments of the invention and further advantages thereof will now be described in more detail, by way of example, with reference to Figs. 1 to 7, in which:

Fig. 1 is a diagrammatic sectional view of the mechanical construction of a motor in accordance with the invention,

Figs. 2a to 2d show the magnetic line-of-force distribution in the stator for a number of different rotor positions,

Fig. 3 represents the coefficient $M_t$ of mutual inductance between the phase windings of a motor in accordance with the invention as a function of the rotor position,

Fig. 4 shows the electric circuit diagram of a motor in accordance with the invention,

Fig. 5 shows an example of a circuit for detecting of the magnetic linkage,

Fig. 6 shows a number of signals appearing in a motor in accordance with the invention as a function of the rotor position, and

Fig. 7 shows the electric circuit diagram of a commutation circuit.

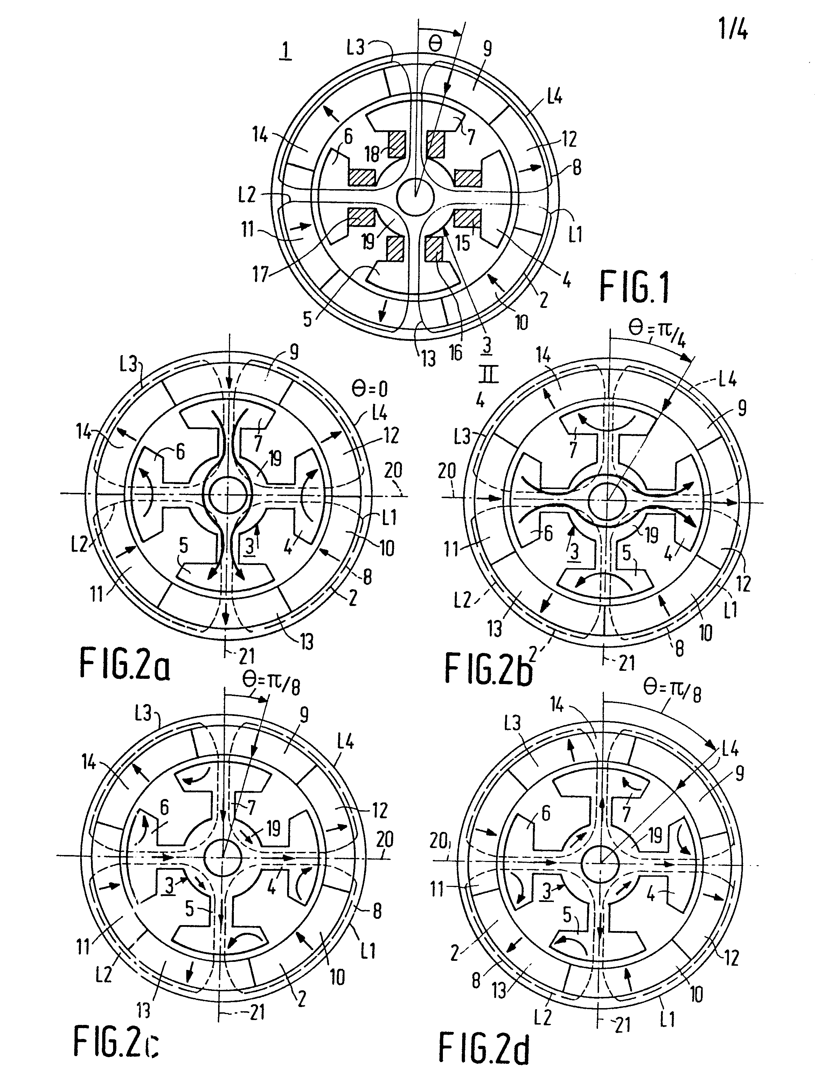

Fig. 1 is a diagrammatic sectional view of the mechanical construction of a motor 1 in accordance with the invention. The motor 1 comprises a permanent-magnet rotor 2 which is rotatable around a stator 3 of a non-linearly magnetisable material (for example ferrometal). The position of the rotor 2 relative to the stator 3 is designated by $\Theta$ . The rotor 2 is provided with a ferromagnetic cylindrical shell 8 on which three magnetic north poles 9, 10 and 11 and three magnetic south poles 12, 13 and 14 are disposed, equidistantly spaced over its inner circumference. The stator 3 comprises a stator core 19 on which four stator teeth 4, 5, 6 and 7 are arranged, which are $90^{\circ}$ spaced from each other and which are provided with shoe-shaped ends. Four stator coils 15, 16, 17 and 18 are arranged on the stator teeth 4, 5, 6 and 7 respectively, the stator coils 15 and 17 as well as the stator coils 16 and 18 being arranged in series. The series arrangement of the stator coils 15 and 17 constitutes the first phase winding F1 of the motor 1 and the series arrangement of the stator coils 16 and 18 constitutes the second phase winding F2 of the motor 1.

The stator coils 15 and 16 are magnetically linked _via_ a first linkage path L1, comprising the stator teeth 4 and 5, a part of the stator core 19 and a part of the rotor cylinder 8. The stator coils 16 and 17 are magnetically linked _via_ a second magnetic linkage path L2 comprising the stator teeth 5 and 6 and a part of the stator core 19 and the rotor cylinder 8. The stator coils 17 and 18 are magnetically linked _via_ a third magnetic linkage path L3 comprising the stator teeth 6 and 7, a part of the stator core 8 and a part of the rotor cylinder 8. The stator coils 18 and 15 are linked _via_ a fourth magnetic linkage path L4 comprising the stator teeth 7 and 4, a part of the stator core 19 and the rotor cylinder 8. The degree of magnetic linkage between two coils can be expressed with the coefficient of mutual inductance. This coefficient is equal to $M = (N1N2)/Rm$, where N1 and N2 are the number of turns of the coils and Rm is the reluctance of the linkage path _via_ which the two coils are linked.

In the embodiment described above all the stator coils 15, 16, 17 and 18 have a number of turns equal to N. The magnetic linkage between the phase windings F1 and F2 is equal to the sum of the magnetic linkages between the stator coils 14, 15, 16 and 17 and may be expressed as follows : $Mt = -N^2(1+Rml) - 1/(Rm2) + 1/(Rm3) - 1/Rm4)$.

Herein, Mt is the coefficient of mutual inductance between
the phase windings F1 and F2. Rml, Rm2, Rm3 and Rm4 are
the reluctances of the respective linkage paths L1, L2, L3
and L4. It is to be noted that the winding direction of
the stator coils 15, 16, 17 and 18 and the manner in
which they are arranged in series are selected in such a
way that the terms corresponding to a series arrangement
in the expression for Mt have different signs.

As is apparent from the foregoing the magnetic
linkage between the phase windings F1 and F2 is dependent
on the ratio between the reluctances in the various
magnetic linkage paths.

If as in the embodiment described in the foregoing
the linkage paths comprise a non-linear magnetic material
the reluctances Rm1, Rm2, Rm3 and Rm4 are functions of the
magnetic field produced in the linkage path. This magnetic
field is produced by the magnetic poles 8, ..., 14 and
the electric currents in the stator coils 15, .... 18.
Generally, the strength of the  part of the magnetic field
produced by the currents through the stator coils in motors
having permanent-magnet rotors is only a fraction ( $<$10 %)
of the magnetic field generated by the permanent-magnetic
poles, so that the distribution of the magnetic lines of
force within the linkage paths mainly depends on the
strength of the magnetic poles 8, ...., 14 and the rotor
position.

By way of illustration Figs. 2a to d show the
distributions of the magnetic lines of force in the stator
for the rotor positions $\theta$ = 0, $\pi/4$, $\pi/8$, 3 $\pi/8$
respectively. For rotor positions $\theta$ = 0, $\pi/4$ the distribut-
ion of the lines of force is symmetrical relative to the
axes of symmetry 20 and 21 of the stator 3. For such a
distribution of the lines of force the reluctances Rm1,
Rm2, Rm3 and Rm4 of the four different magnetic linkage
paths are identical, so that for the rotor positions $\theta$ = 0,
$\pi/4$ the magnetic linkage between the series arrangements
of the stator coils is zero. It will be evident that similar
symmetrical distributions are also obtained for $\theta$ = $\pi/2$,

**0234663**

$3/4\ \pi$, $\pi$, $5/11\ \pi$, $3/2\ \pi$ and $7/4\ \pi$. For rotor positions other than those mentioned above the distribution of the lines of force is not symmetrical relative to the axes of symmetry 20 and 21.

The influence of the asymmetry on the coefficient of mutual inductance Mt will be illustrated with reference to Fig. 2c. For the rotor position $\theta = \pi/8$ shown in this Figure, the magnetic field strengths in the portions of the linkage paths L1, ..., L4 formed by the stator teeth are substantially equal, so that the reluctances of these portions are also substantially equal. However, in the portions of the linkage paths L2 and L4 situated in the stator core 19 between the stator teeth 4 and 7 and the stator teeth 5 and 6 the field strength is substantially higher than the field strength in the portions of the linkage paths L1 and L3 situated in the stator core 19 between the stator teeth 4 and 5 and the stator teeth 6 and 7. The diameter of the stator core is selected in such a way that the magnetic flux in the portions with a higher field strength causes magnetic saturation. As a result of this, the local reluctance in the portions of high field strength of the stator core 19 belonging to the linkage paths L2 and L4 will be higher than the local reluctance in the portions of low field strength belonging to the linkage paths L2 and L3, so that the overall reluctances Rm2 and Rm4 of the linkage paths L2 and L4 respectively is higher than the overall reluctances Rm1 and Rm3 of the linkage paths L1 and L3 respectively. As a result of the differences between these reluctances the coefficient Mt of mutual inductance is then unequal to zero. It is to be noted that the magnitude of the coefficient Mt is maximal if the field strength in the stator core 19 is situated in the range of the magnetisation curve (B/H curve) where a maximum variation of the magnetic flux B is obtained in the case of a varying magnetic field strength H.

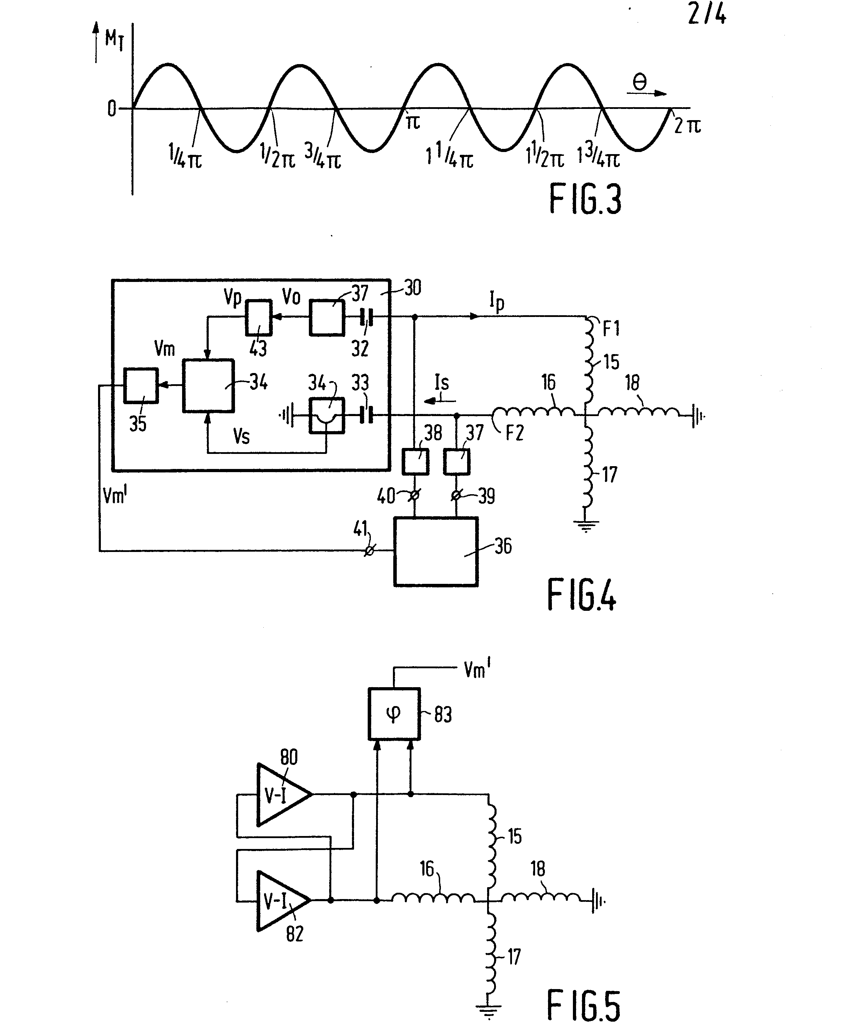

For the rotor position shown in Fig. 2b the effects obtained are similar to those for the rotor

position shown in Fig. 2c, so that for this rotor position
the coefficient Mt of mutual self-inductance is also unequal to zero. Fig. 3 shows Mt as a function of the rotor
position θ.

The geometry of the embodiment described herein
is such that six magnetic poles are spaced equidistantly
over the rotor circumference and four stator teeth are
spaced equidistantly over the stator circumference. For
such a geometry the distribution of the magnetic lines
of force for a number of rotor positions is symmetrical
relative to the axes of symmetry of the stator, whilst
for the other rotor positions the distribution of the
magnetic lines of force is asymmetrical relative to
the axes of symmetry of the stator, so that the differences
between the reluctances in the various linkage paths
between combinations of stator coils result in a rotor-
position- dependent magnetic linkage with a comparatively
small rotor-position-independent component. However, it is
obvious that such an alternately symmetrical and asymmetrical distribution is not only obtained in motors comprising 4 armature teeth and 6 rotor poles. In order to
obtain such a distribution it is merely necessary that the
number of stator teeth and the number of motor poles are
not sub-multiples of each other. Therefore, it is not
necessary that the linkage path portions with a rotor-
position-dependent reluctance are situated in the stator.
These portions may  just as well be situated in the rotor.

In the present embodiment the variations in the
magnetic linkage paths are obtained by influencing a
non-linearly magnetisable material by a magnetic field
having a rotor-position-dependent strength. It will be
obvious to those skilled in the art that these rotor-position-dependent variations can be obtained in  several ways,
for example by the use of a rotor whose local reluctance
varies along the rotor circumference. The portions of
the linkage paths which are situated within the rotor will
these have a rotor-position-dependent reluctance.

As is apparent from the foregoing, the coefficient Mt of mutual inductance between the combinations of stator coils formed by the phase windings F1 and F2 depends on the rotor position if the motor geometry is suitably selected. It is evident that the coefficient of mutual inductance is also rotor-position dependent for other combinations of stator coils.

Fig. 4 shows an example of a circuit 30 for determining the rotor-position-dependent magnetic linkage between the phase winding F1 and the phase winding F2 of the motor 1.

The circuit 30 comprises an oscillator 37 which energizes the stator coils 15 and 17 _via_ a capacitor 32 with an alternating current Ip of constant amplitude and of a frequency higher than the frequency of the energising currents of the motor 1. Moreover, the oscillator 37 generates an output signal Vo whose voltage is proportional to the current Ip. The signal Vo is applied to a phase-correction circuit 43. The output signal Vp of the phase correction circuit is phase shifted through a specific angle relative to Vo. One end of the series arrangement of the stator coils 16 and 18 is connected directly to zero potential. The other end of the series arrangement is also connected to zero potential _via_ a capacitor 33 and a current-detection circuit 34.

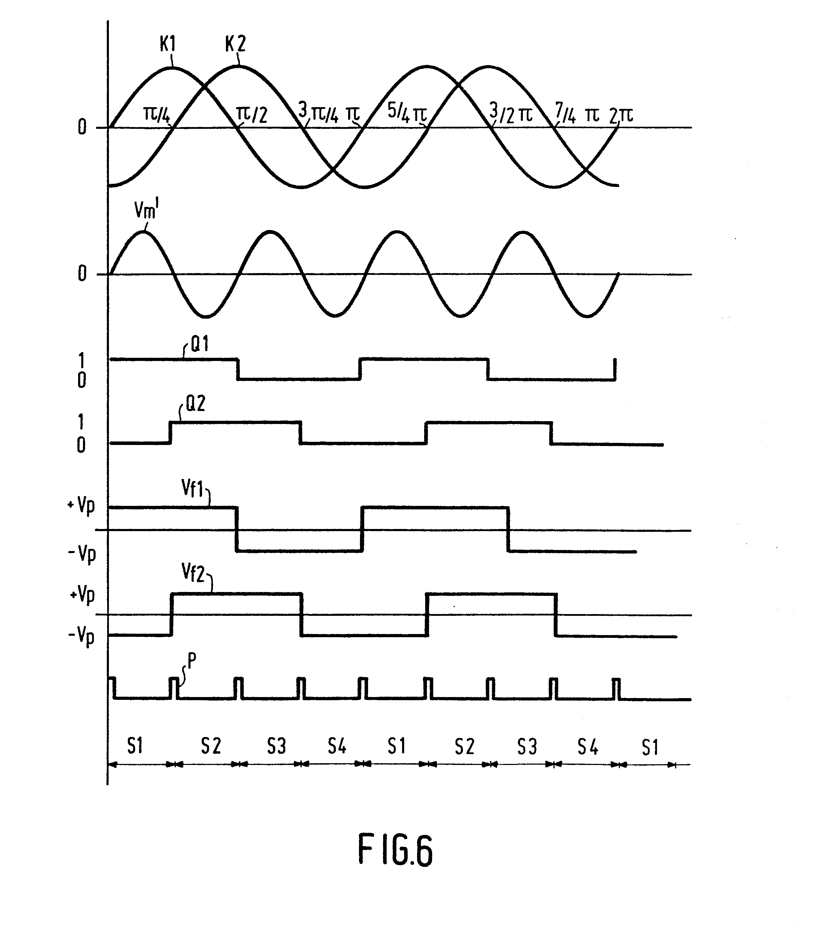

A current detector 34 generates a signal Vs whose voltage is in phase with the current Is through the detector 34. The signals Vs and Vp constitute the input signals to a synchronous detector 34a which generates an output signal Vm which is a measure of the product of the signals Vs and Vp. The signal Vm is applied to a low-pass filter 35. The filtered signal appearing on the output of the low pass filter 35 is designated Vm'. Fig. 6 shows the signal Vm' as a function of θ. Vm' is applied to an input 41 of a commutation circuit 36 for energising the stator coils 15, ....., 18. In order to prevent the detection circuit 30 from being influenced by the commutation circuit 36 the stator coils are energised _via_ low-pass filters 37 and 38, which are arranged between the stator coils 16 and 15 and outputs 39 and 40 of the commutation circuit 36.

The relationship between the currents Ip and Is and the output voltage Uos of the oscillator in the frequency domain may be represented by the following equations:

$$Uos = (jwL1 + 1/(jwC1) + R1)Ip + jwMtIs$$

$$0 = (jwMt)Ip + (jwL2 + 1/(jwC2) + R2)\ Is$$

where L1, R1 are the coefficient of self-inductance and the reluctance of the phase winding F1 respectively. L2 and R2 represent the self-inductance and the reluctance of the phase winding F2 respectively. In the formula jw is the Fourier parameter, C1 and C2 are the capacitances of the capacitors 32 and 33 respectively. As is evident from the above equations, the amplitude of the current Is is proportional to the coefficient Mt of mutual inductance between the phase windings F1 and F2. However, in general the currents are not in phase. The phase shift of the phase-correction network 43 is selected in such a way that the signals Vp and Vs (whose amplitudes are measures of the amplitudes of the currents Ip and Is) are in phase or in phase opposition depending on the sign Mt. These two signals Vp and Vs are multiplied by means of a synchronous detector 34a. After filtering by the low-pass filter 35 the product Wm of this multiplication is a suitable measure of the coefficient Mt of mutual inductance. It is obvious that many variants to the detection circuit 30 are possible.

For example, it is not necessary to arrange the phase correction circuit 43 between the oscillator 37 and the synchronous detector 39. Also if the voltages on the inputs of the synchronous detector are not exactly in phase or in phase opposition the signal Vm on the output of the synchronous detector 39 will be a measure of the coeffficient Mt of mutual inductance. However, the amplitude of the signal Vm is then not optimum. It is also possible to select, for example, the capacitances of the capacitors 32 and 33 so high that the tuning frequencies of the series tuned circuit comprising the series arrangement of the capacitor 32 and the stator coils 16 and 18 and the tuning frequency of the series-tuned circuit comprising the capacitor 33 and the stator coils 16 and 18 are substantially equal to the oscillator frequency of the oscillator 37. This has the advantage that the detection circuit 30 is substantially immune to spurious signals of a frequency situated outside the narrow frequency band determined by the series tuned circuits. It is also possible to employ, for example, the series tuned circuit comprising the capacitor 32 and the stator coils 15 and 17 as the frequency-determining element for the oscillator 37.

      Fig. 5 shows another example of a circuit for detecting the degree of magnetic linkage. The detection circuit shown in this Figure comprises a feedback oscillator circuit comprising a first voltage-current converter 80 and a second voltage-current converter 82, which first voltage-current converter 80 has its input connected to the series arrangement of the coils 16 and 18 and its output to the series arrangement of the stator coils 15 and 17, and which second voltage-current converter 82 has its input connected to the series arrangement of the stator coils 15 and 17 and its output to the series arrangement of the stator coils 16 and 18. The stator coils serve as phase-shifting networks of the oscillator. If the coefficient Mt of mutual inductance is zero the phase shift between the voltages on the outputs of the voltage-current converters 80 and 81 will be $90^O$. However, if Mt is not zero the phase difference will be larger or smaller than $90^O$, depending on the sign of Mt. These differences can be detected by means of a phase detector 83 of a customary type.

      Fig. 6 shows Vm' as a function of the rotor position $\theta$ . Moreover, the ratio K1 = Tl/I1 between the energizing current I1 through the first phase winding F1 and the resulting torque Tl and the ratio

$K2 = T2/I2$ between the energising current I2 through the second phase winding F2 and the resulting torque T2 are shown as a function of the rotor position $\theta$. As is apparent from Fig. 6, the rotor positions for which Vm' is zero coincide with the rotor positions which are suitable for commutation of the energisation, namely the zero crossings of K1 and K2.

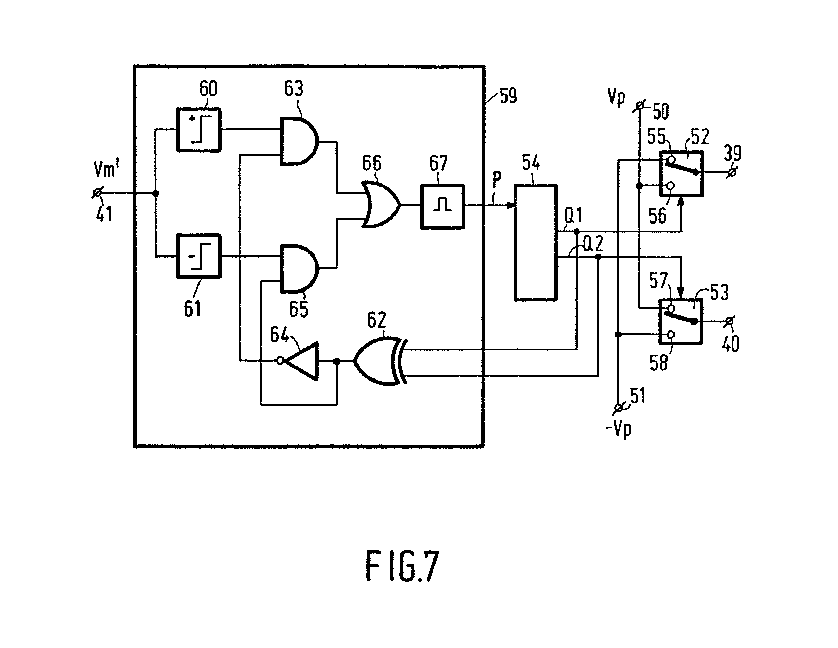

Fig. 7 shows an example of a commutation circuit of the type described comprehensively in European Patent Application EP 0,072,597. The commutation circuit couples the output 39 and 40 to a terminal 50 (to be connected to a positive voltage Vp relative to zero potential ) or to a terminal 51 (to be connected to a negative voltage -Vp relative to zero potential) depending on the signal Vm. For this purpose the commutation circuit comprises a first electronic switch 52 and a second electronic switch 53, which are actuated by the output signals Q1 and Q2 of a 2-bit ring counter 54 which is cyclically advanced under control of a pulse. The first switch 52 comprises a first switching contact (55) and a second switching contact (56) and a master contact. The switching contacts 55 and 56 are connected to the terminals 51 and 50 respectively. The master contact is connected to the output 39. The second electronic switch 53 also comprises a first switching contact (57) and a second switching contact (58) and a master contact. The switching contacts 57 and 58 are connected to the terminals 50 and 51 respectively. The master contact is connected to the output 40. The positions of the switches 52 and 53 as a function of the control signals Q1 and Q2 and the four consecutive states S1, S2, S3 and S4 of the ring counter 54 are given in Table 1.

| State of the ring counter | Q1 | Q1 | switch 52 connects output 39 to | switch 53 connects output 40 to |
|---|---|---|---|---|
| S1 | 1 | 0 | Vp | -Vp |
| S2 | 1 | 1 | Vp | Vp |
| S3 | 0 | 1 | -Vp | Vp |
| S4 | 0 | 0 | -Vp | -Vp |

Table 1.

The commutation circuit further comprises a pulse-generation circuit 59 which, depending on the signals Vm' and Q1 and Q2, generates pulses P for advancing the ring counter 54. The signal Vm' is applied to the inputs of a first level-detector 60 and a second level-detector 61 _via_ the input terminal 41 of the pulse-generation circuit 59. The level detector 60 produces a logic "0" or a logic "1" signal on its output when Vm' is lower or higher than a threshold voltage corresponding to a direct voltage level Vmo. The level detector 61 produces a logic "1" or a logic "0" signal on its output when Vm is lower or higher than the said threshold voltage.

The signals Q1 and Q2 are applied to the pulse generation circuit 59 _via_ the inputs of an EXCLUSIVE-OR gate 62 which forms part of the pulse-generation circuit 59. The output of the gate 62 is connected directly to the input of a two-input AND gate 65 and, _via_ an inverting circuit 64, to an input of a two-input AND gate 63. The outputs of the level detectors 60 and 61 are connected to the other inputs of the AND gates 63 and 65 respectively. The outputs of the AND gates 63 and 65 are connected to an OR gate 66, whose output is connected to a monostable multivibrator 67 which is responsive to a positive edge. The output signal of the multivibrator 67 serves as the clock signal for the ring counter 54. The operation of the commutation circuit will be explained hereinafter with reference to Fig. 6.

In addition to the said parameters K1, K2, Vm, Q1, Q2 and P the Figure shows the voltages Vf1 and Vf2 across the phase windings F1 and F2. The states S1, S2, S3 and S4 representing the four different energising states are also shown in Fig. 6. For the voltages Vf1 and Vf2 the torque exerted by the rotor is always positive, so that the rotor is rotated in a direction in which the rotor-position angle $\theta$ increases. How a transition from one energising state to the next energising state is determined will be described hereinafter for the transition from S1 to S2.

During S1 the logic value of Q1 is "1" and the logic value of Q2 is "0", so that the output signal of the exclusive OR gate 62 is "1", whilst the output of the inverting circuit 64 is "0". Since during S1 Vm' is greater than Vmo the output signals of the level detectors 60 and 61 are "1" and "0" respectively. The outputs of the AND gates 63 and 65 are then "0", so that the output of the OR gate 66 is also "0". However, as soon as the end of S1 is reached, Vm becomes smaller than Vmo, causing the output signal of the level detector 61 to become "1". As a result of this the output signal of the AND gate 65 and hence the output signal of the OR gate 66 becomes "1". Owing to this 0-1 transition on the output of the OR gate 66 the monostable multivibrator 67 generates a pulse, causing the ring counter 54 to be switched from the state S1 to the state S2. During the transition from S1 to S2 the logic value of Q2 changes from "0" to "1". As a result of this, the output signal of the EXCLUSIVE-OR gate 62 changes from "1" to "0", causing the output signals of the AND gates 63 and 64, and hence the output signal of the OR gate 66, to become "0". At the end of the state S2 Vm again becomes higher than Vmo, as a result of which the monostable multivibrator 67 again generates a pulse, causing the ring counter 54 to proceed to S3. Similarly, at the end of the states S3 and S4 the state of the ring counter 54 proceeds to S4 and S1 respectively.

0234663

13-1-1987

1.        A brushless d.c. motor comprising a permanent-
magnet rotor, a stator of a magnetisable material in
which at least two stator coils are incorporated, a
detection circuit for detecting variations in rotor-
position dependent parameters of the stator coils, and a
commutation circuit for energising the stator coils depending on the detected variations, characterized in that the
stator coils or stator coil combinations are magnetically
linked via  at least one magnetic linkage path having a
substantially rotor-position-independent geometry, in
which linkage path the permanent magnet rotor produces
a magnetic flux with a rotor-position-dependent distribution
the dimensions of the linkage path being selected in such a
way, in order to obtain a rotor-position-dependent linkage,
that in portions of the linkage path a rotor-position-
dependent magnetic saturation is obtained, the
detection circuit being adapted to detect the variations
in magnetic linkage.

2.        A brushless d.c. motor as claimed in Claim 1,
characterized in that the coils or combinations of coils
are linked via different magnetic linkage paths in such a
way that the components of the magnetic linkage determined
by the different linkage paths at least partly compensate
for each other and in that the differences between the
reluctances of the linkage paths are rotor-position
dependent.

3.        A brushless d.c. motor as claimed in Claim 2,
characterized in that the rotor comprises $\underline{m}$ poles which
are spaced equidistantly over the rotor circumference,
in that the stator coils are arranged on $\underline{n}$ stator teeth
which are spaced equidistantly over the stator circum-
ference, $\underline{m}$ and $\underline{n}$ being integers and  not being submultiples
of each other, and in that the portions with a rotor-position-dependent saturation are constituted by the non-linearly magnetisable portions of the linkage paths which are disposed symmetrically relative to one of the axes of symmetry of the stator.

4. A brushless d.c. motor as claimed in Claim 2, characterized in that the number of stator teeth is 4 or a multiple of 4, in that the stator coils on stator teeth which extend in line with each other are arranged in series, in that the detection circuit is adapted to detect the magnetic linkage between series arrangements of stator coils arranged on stator teeth which extend perpendicularly to each other.

5. A brushless d.c. motor as claimed in any one of the preceding Claims, characterized in that the detection circuit comprises means for generating an alternating current in one of the magnetically linked coils or coil combinations, the frequency of said alternating current being higher than the commutation frequency, and means which detect the inductions in the stator coil or coil combinations by the alternating current in order to detect variations in the magnetic linkage.

6. A brushless d.c. motor as claimed in Claim 5, characterized in that the magnetically linked stator coils or combinations of stator coils are included in series tuned circuits having substantially equal tuning frequencies.

7. A brushless d.c. motor as claimed in Claim 6, characterized in that the tuning frequencies are equal to the oscillation frequency of the oscillator.

8. A brushless d.c. motor as claimed in Claim 6, characterized in that one of the series tuned circuits is incorporated in the oscillator as the frequency-determining element.

9. A brushless d.c. motor as claimed in any one of the Claims 1 to 4, characterized in that the detection circuit comprises an oscillator having an oscillation frequency higher than the commutation frequency, the linked stator coils or combinations of stator coils being incorporated in said oscillator as phase-shifting elements, and in that the means for detecting variations in magnetic linkage detect the phase difference between the phase-shifting elements.

FIG.1

FIG.2a

FIG.2b

FIG.2c

FIG.2d

FIG.3

FIG.4

FIG.5

FIG.6

FIG.7

European Patent Office

EUROPEAN SEARCH REPORT

**0234663**
Application number

EP 87 20 0292

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,Y | US-A-4 450 396 (THORNTON)<br>* Column 2, line 27 - column 6, line 14; figures 1-8 * | 1-4 | H 02 K 29/12<br>H 02 P 6/02 |
| Y | US-A-3 706 019 (EREMENKO)<br><br>* Column 2, line 46 - column 7, line 54; figures 1-3 * | 1,3,5-8 | |
| A | | 9 | |
| D,A | PATENTS ABSTRACTS OF JAPAN, vol. 4, no. 48 (E-6)[530], page 89 E 6; & JP-A-55 18 834 (MATSUSHITA DENKI SANGYO K.K.) 09-02-1980<br>* Abstract; figures * | 1 | |
| A | DE-C- 740 374 (A.E.G.)<br>* Page 2, line 29 - page 3, line 51; figure * | 6-9 | TECHNICAL FIELDS SEARCHED (Int Cl 4)<br><br>H 02 K<br>H 02 P |

The present search report has been drawn up for all claims

| Place of search | Date of completion of the search | Examiner |
|---|---|---|
| THE HAGUE | 20-03-1987 | TIO K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82